(19) Europäisches Patentamt
European Patent Office
Office européen des brevets

(11) **EP 1 791 905 B1**

(12) **EUROPÄISCHE PATENTSCHRIFT**

(45) Veröffentlichungstag und Bekanntmachung des Hinweises auf die Patenterteilung:
**03.12.2008 Patentblatt 2008/49**

(51) Int Cl.:
*C08K 5/5333* *(2006.01)*      *C08K 5/098* *(2006.01)*
*C08K 5/00* *(2006.01)*        *C08J 5/18* *(2006.01)*

(21) Anmeldenummer: 05775849.2

(22) Anmeldetag: **23.07.2005**

(86) Internationale Anmeldenummer:
**PCT/EP2005/008048**

(87) Internationale Veröffentlichungsnummer:
**WO 2006/034745 (06.04.2006 Gazette 2006/14)**

(54) **MISCHUNG, POLYESTERZUSAMMENSETZUNG, FOLIE SOWIE VERFAHREN ZU DEREN HERSTELLUNG**

MIXTURE, POLYESTER COMPOSITION, FILM AND METHOD FOR PRODUCING THE SAME

MELANGE, COMPOSITION DE POLYESTER, FILM ET PROCEDE DE PREPARATION

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **24.09.2004 DE 102004046771**

(43) Veröffentlichungstag der Anmeldung:
**06.06.2007 Patentblatt 2007/23**

(73) Patentinhaber: **Lurgi Zimmer GmbH
60295 Frankfurt am Main (DE)**

(72) Erfinder:
• **OTTO, Brigitta
14715 Mitlow (DE)**
• **SEIDEL, Eckhard
60389 Frankfurt (DE)**
• **HELDMANN, Karl-Heinz
65479 Raunheim (DE)**

(74) Vertreter: **Luderschmidt, Schüler & Partner Patentanwälte
John-F.-Kennedy-Strasse 4
65189 Wiesbaden (DE)**

(56) Entgegenhaltungen:
**EP-A- 1 213 123          EP-A- 1 550 683
WO-A-03/062185          US-A1- 2002 028 862**

• **PATENT ABSTRACTS OF JAPAN Bd. 2003, Nr. 12, 5. Dezember 2003 (2003-12-05) -& JP 2004 067924 A (TEIJIN LTD), 4. März 2004 (2004-03-04)**

Bemerkungen:
Die Akte enthält technische Angaben, die nach dem Eingang der Anmeldung eingereicht wurden und die nicht in dieser Patentschrift enthalten sind.

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

## Beschreibung

Die vorliegende Erfindung betrifft Polyesterzusammensetzungen, Filme und Verfahren zu deren Herstellung.

Aromatische Polyester, wie beispielsweise Polyethylenterephthalat sind weithin bekannte Kunststoffe, die u.a. zur Herstellung von Folien eingesetzt werden können. Die wirtschaftliche Bedeutung dieser Kunststoffe erfordert möglichst kostengünstige Verfahren zu deren Herstellung. Zur Erhöhung der Herstellgeschwindigkeit der Folien wird häufig ein Verfahren eingesetzt, bei dem die Polyesterschmelze elektrostatisch aufgeladen wird. Hierbei ist es erforderlich, dass die Polyesterschmelze einen möglichst geringen spezifischen Widerstand aufweist, um eine hohe Produktqualität zu erzielen. Dies wird vielfach durch Zugabe von Metallsalzen zur Schmelze erzielt. Beispielsweise beschreibt die Druckschrift EP 1 213 123 den Einfluss verschiedener Metallsalze auf die Produktqualität extrudierter Folien.

Nachteilig an diesen Polyesterfolien ist die geringe Stabilität des Kunststoffs. Zur Verbesserung dieser Stabilität werden meistens Phosphorverbindungen zugesetzt. Werden übliche Phosphorsäurederivate eingesetzt, so treten Trübungen auf, die für das optische Erscheinungsbild der Folie nachteilig sind.

Aus dem Dokument EP 0 403 664 sind Polyester bekannt, die neben Alkali- und Erdalkalimetallsalzen Phosphoniumverbindungen umfassen. Diese Folien weisen eine hohe Transparenz auf. Darüber hinaus zeigen diese Folien eine hohe thermische Stabilität, wobei diese Folien unter Verwendung der zuvor dargelegten Verfahren mit hoher Geschwindigkeit hergestellt werden können. Nachteilig ist jedoch, dass Phosphoniumverbindungen vielfach gesundheitsschädlich sind, wobei diese aus der Folie migrieren können. Darüber hinaus sind Phosphoniumverbindungen sehr teuer.

Des Weiteren beschreibt beispielsweise die Veröffentlichung "Improved Electrostatic Pinning Using a Biased, Conductive Shield" von M.C. Zaretsky, J. E. Benson, erschienen im Journal of Electrostatics, 40 & 41 (1997) 735-740 die Extrudierbarkeit von Zusammensetzungen, die sowohl Metallsalze als auch die in Dokument EP 0 403 664 beschriebenen Phosphorverbindungen aufweisen.

WO 2004/031258A oder EP-A-1 550 683 befassen sich mit Polyesterzusammensetzungen u.a. für Filme/ Folien. Insbesondere werden antimonfreie oder Sb-reduzierte Polyesterzusammensetzungen offenbart, wobei eine Kombination aus Sb/Ti/P/org. Partikel mit einem bestimmten Durchmesser unter Schutz gestellt wird. Es wird auch ein Zusatz einer bestimmten Menge eines Erdalkalimetalls (Ansprüche 14/15) offenbart. Es finden sich jedoch keine Ausführungen zur Herstellung/Verarbeitung/Lösung des Additivs und der gezielten Verwendung.

JP 2004 067924 A (abstract und online Übersetzung von JPO) beschreibt die Polyesterherstellung durch Umesterung in Gegenwart einer Erdalkalimetallverbindung, einer Phosphorverbindung und einer im Polyester löslichen Titanverbindung. Die Polyester dienen ausschließlich zur Faserherstellung. Es wurden keine Details zur speziellen Verfahrensweise im Hinblick auf die Herstellung und den Einsatz einer besonderen Additivlösung offenbart.

In Anbetracht des Standes der Technik war es nun Aufgabe der vorliegenden Erfindung, eine Polyesterzusammensetzung zur Verfügung zu stellen, mit der Polyesterfolien mit besonders hoher Geschwindigkeit hergestellt werden können, wobei die hergestellten Folien eine hohe thermische Stabilität sowie eine hohe Transparenz aufweisen sollten.

Hierbei sollte die Polyesterzusammensetzung besonders kostengünstig hergestellt werden können. Des Weiteren sollte die Polyesterzusammensetzung auf bekannten Anlagen zu Polyesterfolien verarbeitbar sein. Darüber hinaus sollte die Folie möglichst keine Anteile an gesundheitlich bedenklichen Verbindungen aufweisen.

Darüber hinaus war es eine Aufgabe der vorliegenden Erfindung, Folien mit hervorragenden mechanischen Eigenschaften herzustellen, wobei diese Folien nur geringe Anteile an niedermolekularen Verunreinigungen aufweisen sollten.

Des Weiteren sollten die Folien eine geringe elektrostatische Aufladung zeigen.

Weiterhin sollte die Folie eine hohe Haltbarkeit aufweisen. Insbesondere sollten möglichst wenig Veränderungen durch Migration von Bestandteilen der Folien auftreten.

Weiterhin sollten die hergestellten Polyesterfolien leicht recycelt werden können.

Gelöst werden diese und weitere nicht explizit genannte Aufgaben, die jedoch aus den hierin einleitend diskutierten Zusammenhängen ohne weiteres ableitbar oder erschließbar sind, durch ein Verfahren mit allen Merkmalen des Patentanspruchs 1. Zweckmäßige Abwandlungen dieses erfindungsgemäßen Verfahrens werden in den auf Anspruch 1 zurückbezogenen Patentansprüchen unter Schutz gestellt. Hinsichtlich der Polyesterzusammensetzungen sowie der Folien liefern die Ansprüche der entsprechenden Kategorie eine Lösung der zugrunde liegenden Aufgabe.

Dadurch, dass man bei einem Verfahren zur Herstellung einer Polyesterzusammensetzung, bei welchem man die Polyesterzusammensetzung in den Prozessstufen

A) Veresterung einer Dicarbonsäure mit einem Alkandiol oder Umesterung eines Dicarbonsäuredialkylesters mit einem Alkandiol

B) Präpolykondensation der gebildeten Dicarbonsäuredialkylester zu Präpolykondensaten

C) Schmelzpolykondensation der Präpolykondensate zu Polyester herstellt,

eine Mischung kondensiert umfassend mindestens eine Polyestervorstufe, mindestens ein Alkali- und/oder Erdalkalimetallsalz und mindestens einen Phosphonsäureester der Formel (I)

$$(RO)OC\text{-}R'\text{-}PO(OR)_2 \qquad (I),$$

worin R unabhängig eine Gruppe mit 1 bis 60 Kohlenstoffatomen und R' eine verbindende Gruppe mit 1 bis 20 Kohlenstoffen darstellt,
wobei die Mischung dadurch erhalten wurde, dass der Phosphonsäureester und das Alkali- und/oder Erdalkalimetallsalz als Lösung zugegeben werden,
wobei die Lösung wiederum dadurch erhalten wurde, dass man mindestens ein Alkali- und/oder Erdalkalimetallsalz in Wasser löst, anschließend mindestens ein organisches Lösungsmittel zugibt und nachfolgend mit mindestens einer Mischung versetzt, die mindestens einen Phosphonsäureester der Formel (I) sowie mindestens ein organisches Lösungsmittel umfasst, gelingt es auf nicht ohne weiteres vorhersehbare Weise eine Polyesterzusammensetzung zur Verfügung zu stellen, die zur Herstellung von Polyesterfolien mit hoher Wärmebeständigkeit und Transparenz eingesetzt werden kann,
wobei die Folien mit hoher Geschwindigkeit und geringen Kosten hergestellt werden können.

Zugleich werden eine Reihe weiterer Vorteile erzielt. Hierzu gehören u.a.:

Die Polyesterzusammensetzungen der vorliegenden Erfindung können auf bekannten Anlagen großtechnisch und kostengünstig zu Folien verarbeitet werden.

Darüber hinaus können die erfindungsgemäßen Folien in großem Maßstab mit einer besonders geringen Fehlerquote, gemessen an der hohen Herstellungsgeschwindigkeit, produziert werden.

Darüber hinaus zeigen die erfindungsgemäß erhaltenen Folien eine geringe elektrostatische Aufladung, die für viele Anwendungszwecke vorteilhaft oder notwendig ist.

Die erfindungsgemäßen Folien zeichnen sich durch eine geringe Trübung aus. Darüber hinaus können die erfindungsgemäßen Polyesterzusammensetzungen ohne eine hohe Fehlerquote zu besonders dünnen Folien verarbeitet werden.

Des Weiteren zeigen die erfindungsgemäß erhaltenen Folien einen geringen Anteil an Verunreinigungen und können einfach recycelt werden.

Darüber hinaus weisen die erfindungsgemäßen Polyesterzusammensetzungen und die hieraus erhältlichen Folien keinen Anteil an gesundheitlich bedenklichen Stoffen auf.

Das Verfahren der Erfindung umfasst das Kondensieren einer Mischung umfassend mindestens eine aromatische Polyestervorstufe. Der Begriff der Polyestervorstufe ist hierbei weit zu verstehen. Neben Zusammensetzungen, bei denen mindestens eine freie aromatische Dicarbonsäure oder mindestens ein aromatischer Dicarbonsäurediester mit mindestens einem geeigneten Alkandiol umgesetzt wurde, sind hierbei auch Präpolymere mit einem geringen Molekulargewicht von 500 bis 10000 g/mol sowie Polyester mit einem Molekulargewicht von über 10000 g/mol zu verstehen, die zu einem höheren Molekulargewicht kondensiert werden können, wobei sich die Angabe des Molekulargewichts auf das Zahlenmittel bezieht.

Zu den bekannten aromatischen Dicarbonsäuren gehören Terephthalsäure, Isophthalsäure, und 2,6-Naphthalindicarbonsäure. Zu den üblichen Alkandiolen gehören u.a. Ethylenglycol, 1,3-Propandiol, 1,4-Butandiol und/oder 1,4-Cyclohexandimethanol.

Die aus den Polyestervorstufen erhältlichen aromatischen Polyester sind in der Fachwelt weithin bekannt. Hierzu gehören u.a. Polyethylenterephthalat, Polytrimethylenterephthalat, Polybutylenterephthalat und/oder Polyethylennaphthalat, wobei Polyethylenterephthalat und Polytrimethylenterephthalat bevorzugt sind.

Neben Homopolymeren der zuvor dargelegten Polyester können auch Copolymere eingesetzt werden, wobei hier Mischungen der zuvor dargelegten Dicarbonsäuren eingesetzt werden können. Des Weiteren können diese Copolymere weitere Dicarbonsäuren oder Hydroxycarbonsäuren umfassen, wie beispielsweise 1,4-Cyclohexandicarbonsäure, Adipinsäure und p-Hydroxybenzoesäure.

Der Anteil der Polyestervorstufe in der Mischung umfasst vorzugsweise mindestens 70, besonders bevorzugt mindestens 80 und ganz besonders bevorzugt mindestens 90 Gew.-%, bezogen auf das Gesamtgewicht der Mischung.

Des Weiteren umfasst die Mischung mindestens ein Alkali- und/oder Erdalkalimetallsalz. Diese Verbindungen sind allgemein bekannt. Unter den Alkalimetallen sind hierbei insbesondere Lithium, Natrium und Kalium bevorzugt, wobei Lithium besonders bevorzugt ist. Zu den bevorzugten Erdalkalimetallen gehören Magnesium und Calcium, wobei die Erdalkalimetalle gegenüber den Alkalimetallen bevorzugt sind.

Gemäß einem besonderen Aspekt der vorliegenden Erfindung werden Alkali- und/oder Erdalkalimetallsalze eingesetzt, die in Wasser löslich sind. Bei 25°C beträgt die Löslichkeit hierbei vorzugsweise mindestens 1 g/l, besonders bevorzugt mindestens 5 g/l. Diese Salze sind allgemein bekannt, wobei insbesondere Carbonsäuresalze und Hydroxide und gegebenenfalls Halogenide, der zuvor genannten Metalle eingesetzt werden können.

Zu den besonders bevorzugten Verbindungen gehören u.a. Magnesiumacetat-Tetrahydrat, Calciumacetat-Hydrat, Natriumacetat-Trihydrat, Magnesiumoxid, Magnesiumchlorid-Hexahydrat, Natriumchlorid, Kaliumacetat, Natriumdekahydrat, Natriumhydrogenphosphat-Monohydrat, Litiumcitrat-Tetrahydrat, Litiumhydroxid, Calciumchlorid, Calciumhydrid-Dihydrat (Tetrahydrat), Kaliumchlorid, Baruimacetat-Monohydrat.

Die zuvor dargelegten Alkali- und/oder Erdalkalimetallsalze können einzeln oder als Mischungen eingesetzt werden.

Die Alkali- und/oder Erdalkalimetallsalze können insbesondere als klare Lösung eingesetzt werden, wobei diese Lösungen vorzugsweise eine Trübung kleiner oder gleich 8 gemessen in "nephelometrischen Trübungseinheiten" (NTU) aufweisen. Um klare Lösungen zu erhalten können diese Salze insbesondere in Wasser gelöst und anschließend mit weiteren Lösungsmitteln, insbesondere organischen Lösungsmitteln, wie beispielsweise Ethylenglykol vermischt werden.

Vorzugsweise beträgt der Anteil der Alkali- und/oder Erdalkalimetallsalze 1-1000 ppm, besonders bevorzugt 5-500 ppm, bezogen auf das Gewicht der Polyestervorstufe.

Darüber hinaus umfasst die Mischung zur Herstellung einer Polyesterzusammensetzung mindestens einen Phosphonsäureester der Formel (I)

$$(RO)OC\text{-}R'\text{-}PO(OR)_2 \qquad (I),$$

worin R unabhängig eine Gruppe mit 1-60 Kohlenstoffatomen und R' eine verbindende Gruppe mit 1-20 Kohlenstoffatomen darstellt.

Der Ausdruck "Gruppe mit 1-60 Kohlenstoffatomen" bzw. "Gruppe mit 1-20 Kohlenstoffatomen" kennzeichnet Reste organischer Verbindungen, die 1 bis 60 bzw. 1 bis 20 Kohlenstoffatome aufweisen. Er umfasst aromatische, heteroaromatische, aliphatische und heteroaliphatische Gruppen. Die heteroaromatischen bzw. heteroaliphatischen Gruppen können neben Kohlenstoff- und Wasserstoffatomen insbesondere Sauerstoff-, Stickstoff-, Schwefel- und Phosphoratome aufweisen. Die genannten Gruppen können verzweigt oder nicht verzweigt oder cyclisch sein.

Zu den bevorzugten Gruppen R gehören Cycloalkyl-, Alkyl- oder Arylgruppen mit 1 bis 20 Kohlenstoffatomen, wobei Alkylgruppen besonders bevorzugt sind. Zu den bevorzugten Arylgruppen gehören insbesondere Phenylreste, Benzylreste sowie Naphthylreste. Zu den besonders bevorzugten Alkylgruppen gehören u.a. Methyl-, Ethyl-, Propyl- und Butylreste. Zu den Cycloalkylgruppen gehört insbesondere die Cyclohexylgruppe. Hierbei sind Methyl-, Ethyl-, Propyl- und Butylreste besonders bevorzugt.

Die Gruppe R' in Formel (I) stellt bevorzugt eine Cycloalkylen-, Alkylen- oder eine Arylengruppe mit 1-8 Kohlenstoffatomen, besonders bevorzugt 1-6 Kohlenstoffatomen dar. Hierzu gehören insbesondere Cyclohexylen- und Phenylengruppen sowie Methylen-, Ethylen-, Propylen- oder Butylengruppen, wobei Alkylengruppen gegenüber Arylengruppen bevorzugt sind. Bevorzugt stellt die Gruppe R' in Formel (I) eine Methylen- oder eine Ethylengruppe dar.

Zu den besonders bevorzugten Phosphonsäureestern der Formel (I) gehören u.a. Trimethylphosphonoacetat, Triethylphosphonoacetat (TEPA), Tripropylphosphonoacetat, Tributylphosphonoacetat, Triethylphosphonoproprionat (TEPP), Trimethylphosphonoproprionat Tripropylphosphonoproprionat und Tributylphosphonoproprionat .

Vorzugsweise wird der Phosphonsäureester der Formel (I) in einer Menge im Bereich von 2-1000 ppm, vorzugsweise 10 bis 500 ppm, bezogen auf das Gewicht der Polyestervorstufe, eingesetzt.

Gemäß der vorliegenden Erfindung wird der Phosphonsäureester gemäß Formel (I) in einer Lösung der Polyestervorstufe zugegeben. Diese Lösungen umfassen vorzugsweise 0,1 bis 20 Gew.-%, besonders bevorzugt 1 bis 15 Gew.-% und ganz besonders bevorzugt 2 bis 8 Gew.-%, bezogen auf das Gewicht der Lösung, Phosphonsäureester gemäß Formel (I). Zu den bevorzugten Lösungsmitteln gehören insbesondere organische Lösungsmittel, wobei Ethylenglykol besonders bevorzugt ist.

Besonders bevorzugt liegt das molare Verhältnis von Alkali- und/oder Erdalkalimetallsalz zum Phosphonsäureester im Bereich von 1:0,1 bis 1:2,0, insbesondere 1:0,5 bis 1:1,5.

Überraschend können wärmestabile, klare Lösungen erhalten werden, falls man Alkali- und/oder Erdalkalimetallsalz in Wasser löst, anschließend mindestens ein organisches Lösungsmittel zugibt und nachfolgend mit mindestens einer Mischung versetzt, die mindestens einen Phosphonsäureester der Formel (I)

$$(RO)OC\text{-}R'\text{-}PO(OR)_2 \qquad (I),$$

worin R unabhängig eine Gruppe mit 1 bis 60 Kohlenstoffatomen und R' eine verbindende Gruppe mit 1 bis 20 Kohlenstoffen darstellt, sowie mindestens ein organisches Lösungsmittel umfasst.

Derartige Lösungen stellen wertvolle Zwischenprodukte dar, da die mindestens eine Polyestervorstufe umfassenden Mischungen, mit derartigen Lösungen hergestellt werden. Diese Lösungen weisen insbesondere bei Wärmeeinwirkung eine hohe Stabilität auf.

Die Stabilität dieser Lösungen ist insbesondere deshalb überraschend, weil Lösungen von Erdalkalisalzen, die Wasser und Ethylenglykol umfassen, beim Erwärmen unter Rückfluss trüb werden können. So wird beispielsweise eine wässrige Mg-Acetat -Lösung, wenn sie mit Ethylenglykol auf einen Gehalt von 10 Gew.% Mg-Acetat verdünnt wurde, beim Kochen unter Rückfluss trüb.

Die Alkali- und/oder Erdalkalimetallsalze werden zunächst in Wasser gelöst, und anschließend mit einem organischen Lösungsmittel versetzt. Hierbei liegt das Gewichtsverhältnis von Alkali- und/oder Erdalkalimetallsalz zu Wasser vorzugsweise im Bereich von 2:1 bis 1:10, besonders bevorzugt 1:1 bis 1:4.

Anschließend wird diese Lösung mit mindestens einem organischen Lösungsmittel versetzt, wobei die Lösung vorzugsweise mindestens 50 Gew.-%, besonders bevorzugt mindestens 60 Gew.-% organisches Lösungsmittel umfasst, bezogen auf das Gesamtgewicht der Lösung. Der Anteil an Alkali- und/oder Erdalkalimetallsalz in dieser Lösung beträgt vorzugsweise mindestens 1 Gew.-%, besonders bevorzugt mindestens 8 Gew.-%, bezogen auf das Gesamtgewicht der Lösung.

Setzt man die bei Raumtemperatur klare Lösung von Erdalkalisalzen, die Wasser und mindestens ein organisches Lösungsmittel umfassen, mit Mischungen von organischen Lösungsmitteln und Phosphonsäurederivaten gemäß Formel (I) um, so erhält man überraschend auch unter Rückflussbedingungen stabile klare Lösungen mit Phosphonsäureestern. Diese ergeben auch bei der Filmherstellung die Folien mit den gewünschten Eigenschaften bei der Herstellung und im Produkt.

Bevorzugt umfassen Lösungen von organischen Lösungsmitteln und Phosphonsäurederivaten gemäß Formel (I) mindestens 50 Gew.-%, besonders bevorzugt mindestens 60 Gew.-% organisches Lösungsmittel und bevorzugt mindestens 1 Gew.-%, besonders bevorzugt mindestens 8 Gew.-% Phosphonsäurederivate gemäß Formel (I), jeweils bezogen auf das Gesamtgewicht der Lösung.

Bevorzugt umfassen Lösungen von organischen Lösungsmitteln, Wasser, Alkali- und/oder Erdalkalimetallsalzen und Phosphonsäurederivaten gemäß Formel (I) mindestens 0,5 Gew.-%, besonders bevorzugt mindestens 3 Gew.-% Wasser, bevorzugt mindestens 0,5 Gew.-%, besonders bevorzugt mindestens 3 Gew.-% Alkali- und/oder Erdalkalimetallsalze, bevorzugt mindestens 0,5 Gew.-%, besonders bevorzugt mindestens 3 Gew.-% Phosphonsäurederivate gemäß Formel (I) und mindestens 50 Gew.-%, besonders bevorzugt mindestens 60 Gew.-% organische Lösungsmittel.

Besonders bevorzugt ist das organische Lösungsmittel Ethylenglykol oder eine Verbindung, die Ethylenglykol freisetzen kann.

Neben den zuvor dargelegten Bestandteilen kann die Mischung zur Herstellung von Polyesterzusammensetzungen Verzweigungsmittel umfassen. Zu den erfindungsgemäß bevorzugten Verzweigungsmitteln gehören unter anderem Säuren oder deren Derivate mit mindestens drei funktionellen Gruppen, wie Trimellitsäure, Pyromellitsäure oder tri- bis hexavalente Alkohole, wie Trimethylolpropan, Pentaerythrit, Dipentaerythrit, Glycerin, oder entsprechende Hydroxysäuren. Das besonders bevorzugte Verzeigungsmittel ist Pentaerythrit.

Die Mischung kann vorzugsweise 1 bis 300 ppm, besonders bevorzugt 50 bis 250 ppm Verzweigungsmittel, bezogen auf das Gesamtgewicht der Polyestervorstufe, umfassen.

Die beim Verfahren der Erfindung kondensierte Mischung kann übliche Mengen, vorzugsweise 0 bis 5 Gew.-%, vorzugsweise 0 bis 1 Gew.-%, jeweils bezogen auf das Gesamtgewicht der Mischung weitere Zusatzstoffe als Beimischungen, wie Katalysatoren, Stabilisatoren, Antistatika, Antioxidantien, Flammschutzmittel, Farbstoffe, Farbstoffaufnahme-Modifikatoren, Lichtstabilisatoren, organische Phosphite, optische Aufheller, Füllstoffe und Mattierungsmittel, insbesondere Siliziumoxide, Aluminiumoxide und Tonerden, enthalten.

Die beim Verfahren der Erfindung kondensierte Mischung wird zur Herstellung von Polyesterzusammensetzungen verwendet werden. Hierbei wird eine Mischung umgesetzt, wobei mindestens ein Phosphonsäureester der Formel (I) mit der Polyestervorstufe reagiert. Es wird angenommen, dass hierbei kovalente Bindungen gebildet werden, wobei der hierbei entstehende Polyester Gruppen der Formel (II), (III) und/oder (IV) umfassen kann

$$Z-O-C\,(O)-R'-PO(OR)_2 \qquad (II),$$

$$Z-O-C\,(O)-R'-PO(OR)(OZ) \qquad (III),$$

$$Z-O-C(O)-R'-PO(OZ)_2 \qquad (IV),$$

worin Z einen Polyesterrest, R' eine verbindende Gruppe mit 1 bis 20 Kohlenstoffatomen und R unabhängig eine Gruppe mit 1 bis 60 Kohlenstoffatomen oder ein Wasserstoffatom bezeichnet, ohne dass hierdurch eine Beschränkung erfolgen soll. Der Polyesterrest bezeichnet hierbei eine Gruppe, die durch Kondensation der Polyestervorstufe erhalten werden kann.

Hierbei kann die Herstellung der Polyesterzusammensetzung durch jedes bekannte Verfahren erfolgen. Die Herstellung des Polyesters kann kontinuierlich oder diskontinuierlich durch Umsetzung eines Diols mit einem Diester, wie beispielsweise Dimethylterephthalat, oder mit Terephthalsäure erfolgen. Bevorzugt wird hierbei die Säure, beispielsweise Terephthalsäure, eingesetzt. Zunächst entsteht hierbei der Dicarbonsäurediester, der bei ansteigenden Temperaturen unter Verminderung des Druckes ein- oder mehrstufig polykondensiert wird, wobei Diol und Wasser freigesetzt werden.

Im Allgemeinen werden für diese Umsetzung Katalysatoren eingesetzt, wie beispielsweise Verbindungen des Ti, Mn, Mg, Ca, Li, Co, und/oder Zn für die Umesterung; beispielsweise Verbindungen des Sb, Ti, Ge und/oder Sn für die Veresterung und beispielsweise Verbindungen des Sb, Ti, Pb, Ge, Zn und/oder Sn oder Zeolithe für die Polykondensation. Hierbei werden die Katalysatoren in üblichen Mengen, beispielsweise bis zu 500 ppm, bezogen auf die Polyestervorstufe eingesetzt.

Die Zusatzstoffe, insbesondere das Alkali- und/oder Erdalkalimetallsalz sowie der Phosphonsäureester, können zu Beginn der Polykondensationsreaktion zugegeben werden. Des Weiteren können diese Additive auch zu einem späteren Zeitpunkt der Reaktionsmischung beigefügt werden. Hierbei können diese Zusatzstoffe zusammen oder getrennt zugegeben werden.

Gemäß einer bevorzugten Ausgestaltung der vorliegende Erfmdung wird der Phosphonsäureester erst zugesetzt, wenn mindestens 50%, insbesondere mindestens 70% des Veresterungsgemisches verestert sind. Besonders bevorzugt liegt der Veresterungsgrad im Bereich von 80 bis 99%, besonders bevorzugt 92 bis 98%. Dieser Veresterungsgrad (U) kann hierbei aus der Verseifungszahl ($V_Z$) und der Säurezahl ($S_Z$) des Reaktionsgemisches gemäß U= ( $V_Z$ - $S_Z$) *100/ $V_Z$ berechnet werden. Die Verseifungszahl wird durch Verseifung mit Kaliumhydroxid in n-Propanol/ Ethylenglykol (8:2) und potentiometrische Titration und die Säurezahl durch potentiometrische Titration in Dimethylformamid bestimmt.

Weitere Einzelheiten zur Herstellung der Polyesterzusammensetzung sind unter anderem in Encyclopedia of Polymer Science and Engineering Bd. 12, 2. Auflage, Seiten 195-210, EP 0 921 145, US 4,113,704 und DE-OS 198 41 375 dargelegt.

Der in der Zusammensetzung enthaltene Polyester kann im Allgemeinen eine intrinsische Viskosität im Bereich von 0,5-0,8, vorzugsweise 0,56-0,70 dL/g, gemessen in Phenol/Dichlorbenzol (6:4) bei 25°C aufweisen (125 mg Polyester auf 25 ml Lösung).

Der auf das Metall bezogene Anteil an Alkali- und/oder Erdalkalimetallen in der Polyesterzusammensetzung, bezogen auf das Gewicht der Zusammensetzung, liegt vorzugsweise im Bereich von 5 bis 1000 ppm, besonders bevorzugt 10 bis 500 ppm.

Der atomare Anteil an Phosphor der Polyesterzusammensetzung, bezogen auf das Gewicht der Zusammensetzung, liegt vorzugsweise im Bereich von 5 bis 500 ppm, besonders bevorzugt 10 bis 250 ppm.

Vorzugsweise weist die erfindungsgemäße Polyesterzusammensetzung einen Trübungsgrad in "nephelometrischen Trübungseinheiten" (NTU) kleiner oder gleich 12, insbesondere kleiner oder gleich 8, auf.

Darüber hinaus weist eine erfindungsgemäße Polyesterzusammensetzung einen geringen spezifischen Widerstand auf. Vorzugsweise beträgt dieser Widerstand höchstens $10^8$ Ohm x cm, insbesondere höchstens 5 x $10^7$ Ohm x cm, wobei der spezifische Widerstand über die Messung der Schmelzeleitfähigkeit in einer Edelstahlzelle mit angeschlossenem Meßgerät bestimmt wurde.

Des Weiteren weist eine erfindungsgemäße Polyesterzusammensetzung eine hohe thermische Beständigkeit auf. Bevorzugt beträgt die thermooxidative Stabilität mindestens 30%, besonders bevorzugt mindestens 50% gemessen mit thermogravimetrischer Analyse unter Luft bei Temperaturen bis 300 °C.

Die erfindungsgemäßen Polyesterzusammensetzungen weisen vorzugsweise einen geringen Anteil an Verunreinigungen, insbesondere an Acetaldehyd auf. Der Anteil an Acetaldehyd beträgt vorzugsweise höchstens 150 ppm, besonders bevorzugt höchstens 100 ppm und ganz besonders bewvorzugt höchstens 50 ppm, bezogen auf das Gewicht der Zusammensetzung.

Die Polyesterzusammensetzung kann zu Granulaten verarbeitet werden. Des Weiteren kann die aus dem Herstellungsverfahren erhaltene Polyesterschmelze unmittelbar, beispielsweise zu Folien, verarbeitet werden.

Die Herstellung von Folien aus der Polyesterzusammensetzung ist ebenfalls bekannt, wobei in diesem Zusammenhang unter anderem auf die Druckschrift Encyclopedia of Polymer Science and Engineering Bd. 12, 2. Auflage, Seiten 195-210 und US 2,823,421 verwiesen wird.

Zur Herstellung von Folien aus den Polyesterzusammensetzungen werden vorzugsweise Verfahren eingesetzt, bei denen der Polyester elektrostatisch aufgeladen wird, um die Haftung des Polyesters auf der Kühlwalze zu erhöhen. Derartige Verfahren sind seit längerem bekannt. Bevorzugte Varianten werden u.a. in EP- 0 707 940 sowie in der zuvor dargelegten Veröffentlichung "Improved Electrostatic Pinning Using a Biased, Conductive Shield", Journal of Electrostatics 40&41 (1997) 735-740, beschrieben.

Üblichwird die Polyesterzusammensetzung in geschmolzenem Zustand durch eine Düse auf eine Walze extrudiert, die im Allgemeinen eine Temperatur im Bereich von 60°C bis 80°C aufweisen kann. Vielfach entsteht hierbei ein Film aus amorphem Polyester. Falls eine Polyethylenterephthalat umfassende Schmelze verarbeitet wird, liegt die Temperatur der Polyesterschmelze im Allgemeinen im Bereich von 270 bis 310 °C.

Der Kristallinitätsgrad des Films unmittelbar nach Verlassen der ersten Walze, d.h. vor dem Strecken der Folie, ist im Allgemeinen kleiner als 5%, vorzugsweise kleiner oder gleich 1 % und besonders kleiner oder gleich 0,5%.

Die Dicke des Films, der durch Überführen der Polyesterschmelze auf eine Walze erhalten wird, kann in einem weiten Bereich liegen, wobei dieser Wert von der beabsichtigten Anwendung der Folie sowie den Verstreckungsfaktoren in longitudinaler und transversaler Richtung abhängig ist. Im Allgemeinen liegt die Dicke des Films im Bereich von 3 bis 500 µm, vorzugsweise 6 bis 300 µm.

Die Geschwindigkeit der Walze, auf die die Polyesterschmelze überführt wird, kann üblich im Bereich von 80 bis 140 m/min, vorzugsweise 90 bis 120 m/min liegen.

Anschließend kann der erhaltene Film in longitudinaler Richtung, d.h., in Maschinenlaufrichtung gestreckt werden. Im Allgemeinen wird der Film bei einer Temperatur von 75 bis 100°C, vorzugsweise 85 bis 90°C longitudinal gestreckt.

Der Faktor, um den der Film gestreckt wird, liegt vorzugsweise im Bereich von 2 bis 6, besonders bevorzugt 3 bis 5, abhängig von einer Einfach- oder Mehrfachverstreckung.

Vorzugsweise wird der Film, der durch Überführen der Polyesterschmelze auf eine Walze erhalten wurde, mit einer Geschwindigkeit im Bereich von 200 bis 600 m/min, besonders bevorzugt 270 m/min bis 400 m/min longitudinal gestreckt.

Nach diesem Schritt weist die Folie vorzugsweise einen Kristallinitätsgrad im Bereich von 10 bis 25%, insbesondere 15 bis 20% auf.

Die so erhaltene Folie kann beispielsweise zur Herstellung von Bändern für Verpackungen dienen.

Des Weiteren kann die nach der longitudinalen Streckung erhaltene Folie in einem weiteren Schritt transversal, d.h. quer zur Maschinenlaufrichtung, gestreckt werden.

Vorzugsweise liegt der Faktor, um den die Folie transversal gestreckt wird, im Bereich von 2 bis 5, besonders bevorzugt 3 bis 4. Im Allgemeinen wird der Film bei einer Temperatur von 90 bis 120°C, vorzugsweise 100 bis 120°C transversal gestreckt.

Nach dem Strecken in transversaler Richtung weist die Folie vorzugsweise eine Kristallinität im Bereich von 20 bis 45%, insbesondere 30 bis 40% auf.

Die so erhaltene Folie kann unter anderem als Verpackungsmaterial, insbesondere als Schrumpffolie eingesetzt werden.

Des Weiteren kann die Folie auch einem Wärmestabilisierungsschritt unterzogen werden, sodass die Folie bei Erwärmen auf Temperaturen auf 150°C oder auf 190°C nur einen geringen Schrumpf zeigt. Hierzu wird die transversal gestreckte Folie für einige Sekunden auf Temperaturen im Bereich von 180°C bis 220°C erwärmt. Dadurch steigt die Kristallinität auf etwa 50 % an.

Die durch das Verfahren der vorliegenden Erfindung erhältlichen Folien können auf sämtlichen Gebieten eingesetzt werden, in denen auch herkömmliche Folien eingesetzt werden. So können aus den Folien Filme für Verpackungen, beispielsweise im Lebensmittelbereich und auf dem medizinischen Sektor, und Filme für die Fotografie und für die Datensicherung, beispielsweise Mikrofilme, Magnetbänder, Folien für Druckanwendungen, beispielsweise hot-stamping Folien hergestellt werden.

Die Dicke der durch das vorliegende Verfahren erhältlichen Folien liegt im Allgemeinen im Bereich von 1 µm bis 350 µm, wobei dieser Wert von der Anwendung abhängig ist. So beträgt beispielsweise die Dicke von Folien zur Herstellung von Verpackungen 6 bis 250 µm, für Filme 50 µm bis 175 µm, für technische Filme und Mikrofilme 100 bis 200 µm, für die Isolierung von Motoren und Generatoren 250 bis 350 µm, wohingegen die Dicke von Folien zur Herstellung von Kondensatoren im Bereich von 1 bis 5 µm liegt.

Die erfindungsgemäßen Folien weisen vorzugsweise eine geringe Fehlerquote bei geringer Foliendicke auf. Bevorzugte Folien weisen höchstens 1100, insbesondere höchstens 900 und besonders bevorzugt höchstens 600 Fehler größer 50 µm pro m$^2$ auf, wobei diese Werte auch bei dünnen Folien erzielt werden, die vorzugsweise eine Dicke von höchstens 250 µm, besonders bevorzugt höchstens 30 µm aufweisen.

Die Erfindung wird nachfolgend durch Beispiele und Vergleichsbeispiele veranschaulicht, ohne dass hierdurch eine Beschränkung erfolgen soll.

**Herstellung von Additivzusätzen**

1.1. Ansetzen einer 10 Gew.-%igen Mg(Ac)$_2$ - Lösung in Ethylenglykol (EG) (Magnesiumacetat (Mg(Ac)$_2$ x 4H$_2$O) der Fa. Riedel de Haen

Diese Lösung lässt sich nicht klar herstellen. Es entsteht immer, ob warm oder kalt gelöst, eine milchig trübe Lösung. Löst man das Mg- Acetat zuvor 1:2 mit Wasser und verdünnt mit EG auf einen Mg-Acetatgehalt in der Lösung auf 10 Gew.-% (Raumtemperatur), bleibt die Lösung klar und farblos. Bei Kochen am Rückfluss wird die Lösung milchig trübe. Die klare, bei Raumtemperatur angesetzte wässrig-glykolische Mg-Acetatlösung wird für weitere Mischtests mit glykolischen Lösungen ausgewählter P-Verbindungen verwendet.

1.2. Ansetzen von klaren Lösungen in EG folgender P-Verbindungen in einer Konzentration von jeweils 10 Gew.-%:

Phosphorsäure;

Carboxyethylphosphonsäure (CEPA) der Firma Rhodia Consumer Specialities
Triethylphosphonoacetat (TEPA) der Firma Rhodia Consumer Specialities;
Triethylphosphonopropionat (TEPP) der Fa. ON-CHEM);
Tris-triethylenglykolphosphat (TEGPA) der Firma Masso.

1.3. Versetzen der wässrig-glykolischen $Mg(Ac)_2$ - Lösung mit den glykolischen Lösungen ausgewählter P-Verbindungen

In der nachfolgenden Tabelle 1 sind die Ergebnisse der Mischtests bei Raumtemperatur (20°C) und unter Rückflussbedingungen (RF) dargestellt:

Tab. 1 Mischtests

|  | $Mg(Ac)_2$ Lsg., 20 °C | $Mg(Ac)_2$ Lsg., RF |
|---|---|---|
| Phosphorsäure | Trüb -> Niederschlag | Niederschlag |
| CEPA | Über Nacht trüb | Trüb |
| TEPA | Klar | Klar |
| TEPP | Klar | Klar |
| TEGPA | Klar | Trüb |

Aus der Tab. 1 wird ersichtlich dass weder Phosphorsäure noch Carboxyethylphosphonsäure (CEPA) geeignet sind, stabile Gemische als Dosierlösungen für den Polyesterprozess zu bilden. Auch der Phosphorsäureester TEGPA, ein gebräuchlicher P-Stabilisator im PET-Prozess, führt zu Trübungen und Ausfällungen mit Mg-Acetat. Lediglich die Phosphonsäureester TEPA und TEPP bilden klare glykolische Lösungen mit Mg-Acetat selbst unter Rückflussbedingungen.

**Vergleichsbeispiel 1**

Zur Herstellung der Polyesterzusammensetzung wurde ein 10l Laborautoklav mit Destillationskolonne für die Veresterung sowie ein Kondensor, eine Kühlfalle sowie ein Vakuumstrang für die Präpolykondensation und Polykondensation eingesetzt.

Die Anlage wurde mit 5.170 g Veresterungsprodukt, 200 ppm Sb (bezogen auf den Polyester) und 30 ppm Phosphor (in Form von Triethylphosphonoacetat der Firma Rhodia Consumer Specialities (TEPA)) beschickt. Das Veresterungsprodukt war eine Terephthalatethylenglykolvorstufe mit einem Umsatz von 97,40 % und einem Schmelzpunkt (DSC) von 240,9°C. Das Antimon wurde als Antimontriacetat in glykolischer Lösung (2 Gew.-%) zugesetzt. TEPA wurde in Ethylenglykol zugegeben, wobei die Lösung 10 Gew.-% TEPA umfasste.

Zunächst wurde die Anlage mit Stickstoff inertisiert. Anschließend wurde die Mischung auf 250°C erwärmt. Die Präpolykondensation und die Polykondensation wurde nach einem Temperatur-Druck-Programm durchgeführt, welches in Tabelle 2 dargestellt ist. Nachdem eine intrinsische Viskosität von 0,63 dl/g erreicht war, wurde die Kondensation beendet.

Tabelle 2

| Seg. Nr. | Zeit [min] | Produkttemperatur [°C] | Druck [mbar] |
|---|---|---|---|
| 1 | 0 | 250 | 1000 |
| 2 | 40 | 270 | 1000 |
| 3 | 50 | 270 | 200 |
| 4 | 75 | 270 | 200 |
| 5 | 80 | 270 | 50 |
| 6 | 100 | 270 | 50 |
| 7 | 105 | 270 | 10 |
| 8 | 110 | 271 | 1 |
| 9 | 200 | 280 | 1 |
| 10 | Ende | 280 | 1 |

Die Eigenschaften der erhaltenen Polyesterzusammensetzungen wurden nach den folgenden Verfahren analysiert, wobei die erhaltenen Daten sowie die Polykondensationsdauer in Tabelle 3 dargelegt sind.

Die intrinsische Viskosität (I.V) wurde bei 25 °C an einer Lösung von 500 mg Polyester in 100 ml eines Gemisches aus Phenol und 1,2-Dichlorbenzol (3 : 2 Gew.-Teile) gemessen.

Die Bestimmung von Diethylenglykol (DEG) im Polyester erfolgte mittels Gaschromatographie nach vorangegangener Methanolyse von 1 g Polyester in 30 ml Methanol unter Zusatz von 50 mg/l Zinkacetat im Bombenrohr bei 200 °C.

Die COOH-Endgruppenkonzentration wurde mittels photometrischer Titration mit 0,05 n ethanolischer Kalilauge gegen Bromthymolblau einer Lösung eines Polyesters in einem Gemisch aus o-Kresol und Chloroform (70 : 30 Gew.-Teile) bestimmt.

Die Messung der Farbwerte L und b erfolgte nach HUNTER, wobei

$$L = 10 \cdot \sqrt{Y}$$

und

$$b = \frac{7,0}{\sqrt{Y}} \cdot (Y - 0,8467 \cdot Z).$$

Die Polyesterchips wurden zunächst im Trockenschrank bei 135 ± 5 °C während einer Stunde kristallisiert. Die Farbwerte wurden danach ermittelt, indem in einem Dreibereichsfarbmessgerät der Farbton der Polyesterprobe mit drei Fotozellen, denen je ein Rot-, Grün- und Blaufilter vorgeschaltet war, gemessen wurde (X-, Y- und Z-Werte). Die Auswertung erfolgte nach der Formel von Hunter.

Der Acetaldehyd wurde durch Erhitzen in einem geschlossenen Gefäß aus dem Polyester ausgetrieben und der Acetaldehydgehalt im Gasraum des Gefäßes gaschromatographisch durch Head Space - Analyse bestimmt (Gaschromatograph mit FID und Head Space-Injektionssystem HS40, Perkin Elmer; Trägergas: Stickstoff; Säule: 1,5 m Edelstahl, Füllung: PorapackQ, 80 -100 mesh; Probenmenge: 2 g; Heiztemperatur: 150 °C, Heizdauer: 90 min).

Die Messung des Trübungsgrades in "nephelometrischen Trübungseinheiten" (NTU) erfolgte an einer 10 Gew.-%igen Lösung von Polyester in Phenol/1,2 Dichlorbenzol (3 : 2 Gew.-Teile) mit einem Nephelometer der Fa. Hach (Typ XR, nach US-Patent 4 198 161) in einer Küvette mit 22,2 mm Durchmesser in Analogie zu der für Wasser gebräuchlichen Norm DIN 38404, Teil 2. Gemessen wird die Intensität des Streulichtes im Vergleich zu einer Formazin-Standardlösung abzüglich des Wertes vom Lösungsmittel (ca. 0,3 NTU).

Die Messung des Glaspunktes, des Kristallisationspunktes sowie des Schmelzpunktes erfolgte folgendermaßen:

7-9 mg der Polyesterprobe werden in einem Aluminiumtiegel in einem Differential-Scanning-Calorimeter (DSC) unter Stickstoffatmosphäre für eine Minute bei 310 °C belastet, die Probe wird auf einem Aluminiumblech abgekühlt und die Ofentemperatur auf 35 °C reduziert. Die abgekühlte Probe wird in Schritten von 10 K/min auf 300 °C erwärmt und während dessen die Glasübergangstemperatur Tg, die Kristallisationstemperatur Tk und der Schmelzpunkt Tm gemessen.

Der Filtertest wurde folgendermaßen durchgeführt:

Über einen Laborextruder mit druckabhängiger Schneckengeschwindigkeitskontrolle werden 2-3 kg vorgetrocknetes Polyestermaterial bei Temperaturen von 290 °C über einen Filter mit einer nominellen Maschenweite von 15 μm durchgesetzt und der Druckanstieg am Filter über eine Zeit von 60 min. bewertet.

Der Filterwert Fw wird über folgende Formel berechnet:

$$Fw = A \times (Pe - Pb) / M \quad [bar \times cm^2/kg]$$

Pe - Druck am Testende in bar
Pb - Druck zu Testbeginn in bar
M - Durchgesetzte Polymermenge in Kg

A - Filterfläche in cm$^2$

Bestimmung der optischen Fehler in der Folie:

Das Polymer wird in einem Laborextruder aufgeschmolzen. Über eine Flachdüse wird ein Dickfilm erzeugt, der mit Hilfe einer temperierten Kühlwalze zu einer Folie ausgebildet wird. Diese wird durch ein optisches Inspektionssystem gezogen, in dem die Folienfehler mittels eines speziellen digitalen Hochgeschwindigkeitszeilensensors mit Bildverarbeitungsrechner (FS 5 der Fa. Optical Control Systems GmbH, OCS) ermittelt werden. Zur Auswertung der gemessenen Fehler werden die Impulse bestimmten Größen- und Formklassen zugeordnet. Es erfolgt die Angabe der mittleren Anzahl der sichtbaren Fehler > 50 $\mu$m/m$^2$.

Die Leitfähigkeit des Polyesters wird mit einer speziell dafür entwickelten Edelstahlzelle mit Elektroden und einem angeschlossenen Meßgerät mit digitaler Meßwertanzeige ermittelt. Dazu wird die Polymerprobe in Schritten von 10 K/min auf 270 °C aufgeheizt und nach einer Beharrungszeit von 10 min in Schritten von 10 K/min bis auf 300 °C aufgeheizt, die Leitfähigkeit in $\mu$S/min gemessen und mit der individuellen Zellkonstante auf $\Omega \cdot$ cm umgerechnet.

**Beispiel 1**

Das Beispiel 1 wurde entsprechend dem Vergleichsbeispiel 1 durchgeführt, wobei jedoch kein Antimon und kein TEPA hinzugefügt wurde. Statt dessen wurden 22,8 g einer wässrigen, glykolischen Lösung zugesetzt, die 10 Gew.-% Magnesiumacetat umfasste, wobei das Magnesiumacetat zuvor in Wasser (1:2) gelöst und anschließend mit Ethylenglycol gemischt wurde (vgl. Herstellung der Additivzusätze, TEPA). Darüber hinaus wurden 11,9 g einer glykolischen Triethylphosphonopropionat-Lösung zugegeben, die 10 Gew.-% Triethylphosphonopropionat (TEPP) der Firma ON-Chem enthielt.
Der Polyestervorstufe wurden dementsprechend 50 ppm Magnesium und 30 ppm Phosphor, jeweils bezogen auf die Polyestervorstufe, hinzugefügt.
Die durch die Polykondensation erhaltene Polyesterzusammensetzung wurde gemäß den zuvor dargelegten Verfahren analysiert.
Die erhaltenen Daten sind in Tabelle 3 aufgeführt.

**Vergleichsbeispiel 2**

Das Vergleichsbeispiel 2 wurde entsprechend dem Beispiel 1 durchgeführt, wobei jedoch kein TEPP hinzugefügt. wurde. Statt dessen wurden 19 g einer glykolischen Lösung zugesetzt, die 10 Gew.-% Tris-triethylenglykolphosphat (TEGPA) der Firma Masso (TEGPA) enthielt. Der Polyestervorstufe wurden dementsprechend 50 ppm Magnesium und 30 ppm Phosphor, jeweils bezogen auf die Polyestervorstufe, hinzugefügt.
Die durch die Polykondensation erhaltene Polyesterzusammensetzung wurde gemäß den zuvor dargelegten Verfahren analysiert.
Die erhaltenen Daten sind in Tabelle 3 aufgeführt.

**Vergleichsbeispiel 3**

Das Vergleichsbeispiel 3 wurde entsprechend dem Vergleichsbeispiel 2 durchgeführt, wobei jedoch kein TEGPA hinzugefügt wurde. Statt dessen wurde 4,9 g einer glykolischen Lösung zugesetzt, die 10 Gew.-% Phosphorsäure enthielt. Der Polyestervorstufe wurden dementsprechend 50 ppm Magnesium und 30 ppm Phosphor, jeweils bezogen auf die Polyestervorstufe, hinzugefügt.
Die durch die Polykondensation erhaltene Polyesterzusammensetzung wurde gemäß den zuvor dargelegten Verfahren analysiert.
Die erhaltenen Daten sind in Tabelle 3 aufgeführt.

**Beispiel 2**

Das Beispiel 2 wurde entsprechend dem Beispiel 1 durchgeführt, wobei jedoch 200 ppm Antimon zugegeben wurden, bezogen auf den Polyester. Das Antimon wurde als Antimontriacetat in glykolischer Lösung (2 Gew.-%) zugesetzt. Der Polyestervorstufe wurden dementsprechend 50 ppm Magnesium und 30 ppm Phosphor, jeweils bezogen auf die Polyestervorstufe, hinzugefügt.
Die durch die Polykondensation erhaltene Polyesterzusammensetzung wurde gemäß den zuvor dargelegten Verfahren analysiert.

Die erhaltenen Daten sind in Tabelle 3 aufgeführt.

**Beispiel 3**

Das Beispiel 3 wurde entsprechend dem Beispiel 2 durchgeführt, wobei jedoch kein TEPP zugegeben wurde. Statt dessen wurden 11,2 g einer glykolischen Triethylphosphonoacetat-Lösung zugegeben, die 10 Gew.-% TEPA enthielt. Der Polyestervorstufe wurden dementsprechend 50 ppm Magnesium und 30 ppm Phosphor, jeweils bezogen auf die Polyestervorstufe, hinzugefügt.
Die durch die Polykondensation erhaltene Polyesterzusammensetzung wurde gemäß den zuvor dargelegten Verfahren analysiert.
Die erhaltenen Daten sind in Tabelle 3 aufgeführt.

**Beispiel 4**

Das Beispiel 4 wurde entsprechend dem Beispiel 3 durchgeführt, wobei jedoch 100 ppm Magnesium und 60 ppm Phosphor, jeweils bezogen auf die Polyestervorstufe, hinzugefügt wurden.
Die durch die Polykondensation erhaltene Polyesterzusammensetzung wurde gemäß den zuvor dargelegten Verfahren analysiert.
Die erhaltenen Daten sind in Tabelle 3 aufgeführt.

**Beispiel 5**

Das Beispiel 5 wurde entsprechend dem Beispiel 3 durchgeführt, wobei jedoch zusätzlich 125 ppm Pentaerythrit hinzugefügt wurden.
Die durch die Polykondensation erhaltene Polyesterzusammensetzung wurde gemäß den zuvor dargelegten Verfahren analysiert.
Die erhaltenen Daten sind in Tabelle 3 aufgeführt.

Tabelle 3

| Additivzusätze | Einheit | Vergleichsbeispiel 1 | Beispiel 1 | Vergleichsbeispiel 2 | Vergleichsbeispiel 3 |
|---|---|---|---|---|---|
| Sb aus SbAc3 | ppm | 200 | - | - | - |
| Pentaerythrit | ppm | - | - | - | - |
| Mg aus Mg-Acetat | ppm | - | 50 | 50 | 50 |
| P aus Phosphorsäure | ppm | - | - | - | 30 |
| P aus TEPA | ppm | 30 | - | - | - |
| P aus TEPP | ppm | - | 30 | - | - |
| P aus TEGPA | ppm | - | | 30 | - |
| **Analysen** | | | | | |
| Polydauer | min. | 175 | 206 | 215 | 232 |
| Viskosität | dl/g | 0,62 | 0,627 | 0,63 | 0,597 |
| Diethylenglykol | Gew. % | 1,56 | 1,71 | 1,73 | 2,01 |
| COOH - Endgruppen | mmol/kg | 14/14 | 39/41 | 37/38 | 43/46 |
| L Chips kris. | - | 73,8 | 81,6 | 85,7 | 79,7 |
| a Chips kris. | - | -1 | -1,8 | -2,2 | -2,0 |
| b Chips kris. | - | -0,5 | 4,9 | 5,5 | 6,3 |
| Acetaldehyd | ppm | 81 | 79 | 86 | 107 |
| Trübung | NTU | 5,5 | 3,2 | 11,2 | 28,9 |
| Glaspunkt | °C | 79,1 | 78,3 | 79 | 78,2 |
| Kristallisationspunkt | °C | 135,9 | 135,2 | 134,1 | 133,4 |
| Schmelzpunkt | °C | 254 | 253,3 | 252,3 | 253,0 |
| Filtertest | bar*cm$^2$/ kg | 3,4 | 12,1 | 8,9 | 237 |
| Fehler > 50 $\mu$m | 1/m$^2$ | 479 | 1042 | 941 | 13562 |
| Leitfähigkeit | 10$^7$ $\Omega$*cm | 90 | 9,6 | 13,8 | 65 |

Tabelle 3 (Fortsetzung)

| Additivzusätze | Einheit | Beispiel 2 | Beispiel 3 | Beispiel 4 | Beispiel 5 |
|---|---|---|---|---|---|
| Sb aus SbAc3 | ppm | 200 | 200 | 200 | 200 |
| Pentaerythrit | ppm | - | - | - | 125 |
| Mg aus Mg-Acetat | ppm | 50 | 50 | 100 | 50 |
| P aus Phosphorsäure | ppm | | - | - | - |
| P aus TEPA | ppm | - | 30 | 60 | 30 |
| P aus TEPP | ppm | 30 | - | - | - |
| P aus TEGPA | ppm | - | - | - | - |
| **Analysen** | | | | | |
| Polydauer | min. | 151 | 146 | 117 | 129 |
| Viskosität | dl/g | 0,615 | 0,619 | 0,599 | 0,619 |
| Diethylenglykol | Gew. % | 1,69 | 1,76 | 1,73 | 1,72 |
| COOH - Endgruppen | mmol/kg | 24/25 | 25/26 | 26/27 | 24/26 |
| L Chips kris. | - | 74,1 | 73,6 | 74,6 | 74,2 |
| a Chips kris. | - | -1,2 | -0,4 | -1,3 | -1,0 |
| b Chips kris. | - | 0,5 | 0,5 | -0,1 | 0,8 |
| Acetaldehyd | ppm | 88 | 85 | 86 | - |
| Trübung | NTU | 9,9 | 7,3 | 7,8 | 5,0 |
| Glaspunkt | °C | 78,3 | 78,2 | 78,4 | 78,3 |
| Kristallisationspunkt | °C | 137,2 | 137,3 | 137,1 | 136,9 |
| Schmelzpunkt | °C | 254,2 | 253,2 | 253,0 | 254,1 |
| Filtertest | bar*cm$^2$/ kg | 11,2 | 2,1 | 2,3 | 4,2 |
| Fehler > 50 $\mu$m | 1/m$^2$ | 883 | 379 | 435 | 530 |
| Leitfähigkeit | 10$^7$ $\Omega$*cm | 6,0 | 4,5 | 4,0 | 4,5 |

Die erhaltenen Daten zeigen, dass die erfindungsgemäßen Polyesterzusammensetzungen eine hohe Leitfähigkeit sowie eine geringe Trübung aufweisen. Darüber hinaus ergeben sich Vorteile im Hinblick auf den Filtertest.

Überraschend konnten die Vorteile der Erfindung durch Zusatz von Verzweigungsmitteln gesteigert werden. So konnte insbesondere die Trübung und die Polymerisationszeit verringert werden.

Die so hergestellten Polyester wurden in einer Filmanlage mit Doppelschneckenhauptextruder BT-55-33d, Filter BEMATEC 100 $\mu$m, EDI PET Düse, Draht-Pinning (0,12 mm) mit Hilfswickler zu Film verarbeitet. Die Abzugsgeschwindigkeiten wurden von 40 in Zehnerschritten auf 110 m/min gesteigert.

Die Materialien aus den Beispielen 2-5 wurden gegenüber dem Material des Vergleichsbeispiels 1 getestet. Dabei war für die erfindungsgemäßen Polyester eine Erhöhung der Abzugsgeschwindigkeit von 25-30 % möglich.

**Patentansprüche**

1. Verfahren zur Herstellung einer Polyesterzusammensetzung, bei welchem man die Polyesterzusammensetzung in den Prozessstufen

   A) Veresterung einer Dicarbonsäure mit einem Alkandiol oder Umesterung eines Dicarbonsäuredialkylesters mit einem Alkandiol
   B) Präpolykondensation der gebildeten Dicarbonsäuredialkylester zu Präpolykondensaten
   C) Schmelzpolykondensation der Präpolykondensate zu Polyester herstellt,

   wobei man eine Mischung kondensiert umfassend mindestens eine Polyestervorstufe, mindestens ein Alkali- und/ oder Erdalkalimetallsalz und mindestens einen Phosphonsäureester der Formel (I)

   (RO)OC-R'-PO(OR)$_2$ (I),

   worin R unabhängig eine Gruppe mit 1 bis 60 Kohlenstoffatomen und R' eine verbindende Gruppe mit 1 bis 20 Kohlenstoffen darstellt,
wobei die Mischung **dadurch** erhalten wurde, dass der Phosphonsäureester und das Alkali- und/oder Erdalkalimetallsalz als Lösung zugegeben werden, wobei die Lösung wiederum **dadurch** erhalten wurde, dass man mindestens ein Alkali- und/oder Erdalkalimetallsalz in Wasser löst, anschließend mindestens ein organisches Lösungsmittel zugibt und nachfolgend mit mindestens einer Mischung versetzt, die mindestens einen Phosphonsäureester der Formel (I) sowie mindestens ein organisches Lösungsmittel umfasst.

2. Verfahren gemäß Anspruch 1, **dadurch gekennzeichnet, dass** die Gruppe R in Formel (I) unabhängig eine Alkyl- oder eine Arylgruppe mit 1 bis 20 Kohlenstoffatomen darstellt.

3. Verfahren gemäß Anspruch 1 oder 2, **dadurch gekennzeichnet, dass** die Gruppe R' in Formel (I) eine Alkylen- oder eine Arylengruppe mit 1 bis 8 Kohlenstoffatomen darstellt.

4. Verfahren gemäß Anspruch 3, **dadurch gekennzeichnet, dass** mindestens ein Phosphonsäureester ausgewählt ist aus der Gruppe bestehend aus Triethylphosphonoacetat, Trimethylphosphonoacetat, Triethylphosphonopropionat, Trimethylphosphonopropionat.

5. Verfahren gemäß mindestens einem der vorhergehenden Ansprüche, **dadurch gekennzeichnet, dass** die Polyestervorstufe zur Herstellung von Polyethylenterephthalat und/oder Polytrimethylenterephthalat geeignet ist.

6. Verfahren gemäß mindestens einem der vorhergehenden Ansprüche, **dadurch gekennzeichnet, dass** die Verfahren mindestens ein Verzweigungsmittel umfasst.

7. Verfahren gemäß mindestens einem der vorhergehenden Ansprüche, **dadurch gekennzeichnet, dass** das Metallsalz ein Magnesium-, Lithium-, Natrium-, Kalium-, und/oder Calcium- oder Bariumsalz ist.

8. Verfahren gemäß mindestens einem der vorhergehenden Ansprüche, **dadurch gekennzeichnet, dass** die Zusammensetzung mindestens 90 Gew.-% mindestens einer Polyestervorstufe umfasst.

9. Verfahren gemäß mindestens einem der vorhergehenden Ansprüche, **dadurch gekennzeichnet, dass** der Anteil des mindestens einen Alkali- und/oder Erdalkalimetallsalzes im Bereich von 10 bis 500 ppm, bezogen auf das Gewicht der Polyestervorstufe, liegt.

10. Verfahren gemäß mindestens einem der vorhergehenden Ansprüche, **dadurch gekennzeichnet, dass** der Anteil des mindestens einen Phosphonsäureesters der Formel (I), im Bereich von 10 bis 500 ppm, bezogen auf das Gewicht der Polyestervorstufe, liegt.

11. Verfahren gemäß mindestens einem der vorhergehenden Ansprüche, **dadurch gekennzeichnet, dass** das molare Verhältnis von Alkali- und/oder Erdalkalimetallsalz zum Phosphonsäureester im Bereich von 1:0,1- 1:2,0 liegt.

12. Verfahren gemäß Anspruch 1, **dadurch gekennzeichnet, dass** die Lösung eine Trübung kleiner oder gleich 8 gemessen in "nephelometrischen Trübungseinheiten" (NTU) aufweist.

13. Verfahren gemäß Anspruch 1 oder 2, **dadurch gekennzeichnet, dass** das organische Lösungsmittel Ethylenglykol ist.

14. Polyesterzusammensetzung erhältlich nach einem Verfahren gemäß mindestens einem der Ansprüche 1 bis 13.

15. Polyesterzusammensetzung gemäß Anspruch 14, **dadurch gekennzeichnet, dass** die Polyesterzusammensetzung eine Trübung kleiner oder gleich 8 gemessen in "nephelometrischen Trübungseinheiten" (NTU) aufweist.

16. Film umfassend mindestens eine Polyesterzusammensetzung gemäß mindestens einem der Ansprüche 14 oder 15.

17. Film gemäß Anspruch 16, **dadurch gekennzeichnet, dass** der Film einen spezifischen Widerstand kleiner oder gleich $10^8$ Ω*cm aufweist.

18. Film gemäß Anspruch 17, **dadurch gekennzeichnet, dass** der Film eine Dicke im Bereich von 1 μm bis 350 μm aufweist.

**19.** Film gemäß Anspruch 17 oder 18, **dadurch gekennzeichnet, dass** der Film höchstens 900 Fehler größer 50 $\mu$m pro m$^2$ aufweist.

**Claims**

**1.** A method for preparing a polyester composition, wherein the polyester composition is prepared in the process steps

A) esterification of a dicarboxylic acid with an alkane diol or transesterification of a dicarboxylic acid dialkyl ester with an alkane diol
B) prepolycondensation of the formed dicarboxylic acid dialkyl ester to form prepolycondensates
C) melt-polycondensation of the prepolycondensates to form polyester,
wherein a mixture is condensed comprising at least one polyester preliminary stage, at least one alkali and/or alkaline-earth metal salt and at least one phosphonic acid ester having the formula (I)

$$(RO)OC\text{-}R'\text{-}PO(OR)_2 \qquad (I),$$

wherein R independently represents a group with 1 to 60 carbon atoms and R' a linking group with 1 to 20 carbon atoms,
wherein the mixture is obtained by the fact that the phosphonic acid ester and the alkali and/or alkaline-earth metal salt are added as a solution,
wherein the solution has in turn been obtained by the fact that at least one alkali and/or alkaline-earth metal salt is dissolved in water, then at least one organic solvent is added and subsequently mixed with at least one mixture, which comprises at least one phosphonic acid ester having the formula (I) and at least one organic solvent.

**2.** The method according to claim 1, **characterised in that** group R in formula (I) independently represents an alkyl group or an aryl group with 1 to 20 carbon atoms.

**3.** The method according to claim 1 or 2, **characterised in that** group R' in formula (I) represents an alkylene group or an arylene group with 1 to 8 carbon atoms.

**4.** The method according to claim 3, **characterised in that** at least one phosphonic acid ester is selected from the group comprising triethylphosphonoacetate, trimethylphosphonoacetate, triethylphosphonopropionate, trimethylphosphonopropionate.

**5.** The method according to at least one of the preceding claims, **characterised in that** the polyester preliminary stage is suitable for the preparation of polyethylene terephthalate and/or polytrimethylene terephthalate.

**6.** The method according to at least one of the preceding claims, **characterised in that** the method includes at least one branching agent.

**7.** The method according to at least one of the preceding claims, **characterised in that** the metal salt is a magnesium, lithium, sodium, potassium, and/or calcium or barium salt.

**8.** The method according to at least one of the preceding claims, **characterised in that** the composition comprises at least 90 wt.% of at least one polyester preliminary stage.

**9.** The method according to at least one of the preceding claims, **characterised in that** the share of the at least one alkali and/or alkaline-earth metal salt lies in the range from 10 to 500 ppm, related to the weight of the polyester preliminary stage.

**10.** The method according to at least one of the preceding claims, **characterised in that** the share of the at least one phosphonic acid ester having the formula (I) lies in the range from 10 to 500 ppm, related to the weight of the polyester preliminary stage.

**11.** The method according to at least one of the preceding claims, **characterised in that** the molar ratio of alkali and/or alkaline-earth metal salt to phosphonic acid ester lies in the range from 1:0.1 - 1: 2.0.

**12.** The method according to claim 1, **characterised in that** the solution has a turbidity less than or equal to 8 measured in "nephelometric turbidity units" (NTU).

**13.** The method according to claim 1 or 2, **characterised in that** the organic solvent is ethylene glycol.

**14.** A polyester composition obtainable by the method according to at least one of claims 1 to 13.

**15.** The polyester composition according to claim 14, **characterised in that** the polyester composition has a turbidity less than or equal to 8 measured in "nephelometric turbidity units" (NTU).

**16.** A film comprising at least one polyester composition according to at least one of claims 14 or 15.

**17.** The film according to claim 16, **characterised in that** the film has a specific resistance less than or equal to $10^8 \, \Omega$*cm.

**18.** The film according to claim 17, **characterised in that** the film has a thickness in the range from 1 $\mu$m to 350 $\mu$m.

**19.** The film according to claim 17 or 18, **characterised in that** the film has a maximum of 900 faults larger than 50 $\mu$m per m$^2$.

**Revendications**

**1.** Procédé de production d'une composition de polyester dans lequel on produit la composition de polyester dans les étapes de procédé

A) estérification d'un acide dicarboxylique avec un alcanediol ou transestérification d'un dialkylester d'acide dicarboxylique avec un alcanediol
B) prépolycondensation des dialkylesters d'acide dicarboxylique formés en prépolycondensats
C) polycondensation à l'état fondu des prépolycondensats en polyesters, où on condense un mélange comprenant au moins un précurseur de polyester, au moins un sel de métal alcalin et/ou alcalino-terreux et au moins un ester d'acide phosphonique de formule (I)

$$(RO)OC\text{-}R'\text{-}PO(OR)_2 \qquad (I)$$

où R représente indépendamment un groupe ayant 1 à 60 atomes de carbone et R' représente un groupe de liaison ayant 1 à 20 atomes de carbone,
où le mélange a été obtenu par le fait que l'ester d'acide phosphonique et le sel de métal alcalin et/ou alcalino-terreux sont ajoutés sous forme de solution,
où la solution, quant à elle, a été obtenue par le fait que l'on dissout dans l'eau au moins un sel de métal alcalin et/ou alcalino-terreux, puis on ajoute au moins un solvant organique et ensuite on ajoute au moins un mélange qui comprend au moins un ester d'acide phosphonique de formule (I) et au moins un solvant organique.

**2.** Procédé selon la revendication 1 **caractérisé en ce que** le groupe R dans la formule (I) représente indépendamment un groupe alkyle ou un groupe aryle ayant 1 à 20 atomes de carbone.

**3.** Procédé selon la revendication 1 ou 2 **caractérisé en ce que** le groupe R' dans la formule (I) représente un groupe alkylène ou un groupe arylène ayant 1 à 8 atomes de carbone.

**4.** Procédé selon la revendication 3 **caractérisé en ce qu'**au moins un ester d'acide phosphonique est choisi dans le groupe consistant en le phosphonoacétate de triéthyle, le phosphonoacétate de triméthyle, le phosphonopropionate de triéthyle, le phosphonopropionate de triméthyle.

**5.** Procédé selon au moins l'une des revendications précédentes **caractérisé en ce que** le précurseur de polyester convient pour la production de polyéthylènetéréphtalate et/ou de polytriméthylènetéréphtalate.

**6.** Procédé selon au moins l'une des revendications précédentes **caractérisé en ce que** le procédé comprend au moins un agent de ramification.

**7.** Procédé selon au moins l'une des revendications précédentes **caractérisé en ce que** le sel métallique est un sel de magnésium, de lithium, de sodium, de potassium et/ou de calcium ou de baryum.

**8.** Procédé selon au moins l'une des revendications précédentes **caractérisé en ce que** la composition comprend au moins 90 % en masse d'au moins un précurseur de polyester.

**9.** Procédé selon au moins l'une des revendications précédentes **caractérisé en ce que** la proportion du au moins un sel de métal alcalin et/ou alcalino-terreux est située dans la plage de 10 à 500 ppm, par rapport à la masse du précurseur de polyester.

**10.** Procédé selon au moins l'une des revendications précédentes **caractérisé en ce que** la proportion du au moins un ester d'acide phosphonique de formule (I) est située dans la plage de 10 à 500 ppm, par rapport à la masse du précurseur de polyester.

**11.** Procédé selon au moins l'une des revendications précédentes **caractérisé en ce que** le rapport molaire du sel de métal alcalin et/ou alcalino-terreux à l'ester d'acide phosphonique est situé dans la plage de 1 : 0,1 - 1 : 2,0.

**12.** Procédé selon la revendication 1 **caractérisé en ce que** la solution présente un trouble inférieur ou égal à 8 mesuré en « unités de turbidité néphélométriques » (UTN).

**13.** Procédé selon la revendication 1 ou 2 **caractérisé en ce que** le solvant organique est l'éthylèneglycol.

**14.** Composition de polyester pouvant être obtenue selon un procédé selon au moins l'une des revendications 1 à 13.

**15.** Composition de polyester selon la revendication 14 **caractérisée en ce que** la composition de polyester présente un trouble inférieur ou égal à 8 mesuré en « unités de turbidité néphélométriques » (UTN).

**16.** Film comprenant au moins une composition de polyester selon au moins l'une des revendications 14 ou 15.

**17.** Film selon la revendication 16 **caractérisé en ce que** le film présente une résistance spécifique inférieure ou égale à $10^8$ Ω*cm.

**18.** Film selon la revendication 17 **caractérisé en ce que** le film présente une épaisseur dans la plage de 1 μm à 350 μm.

**19.** Film selon la revendication 17 ou 18 **caractérisé en ce que** le film présente au plus 900 défauts de plus de 50 μm par m$^2$.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1213123 A
- EP 0403664 A
- WO 2004031258 A
- EP 1550683 A
- JP 2004067924 A
- EP 0921145 A
- US 4113704 A
- DE OS19841375 A
- US 2823421 A
- EP 0707940 A
- US 4198161 A

**In der Beschreibung aufgeführte Nicht-Patentliteratur**

- **M.C. ZARETSKY ; J. E. BENSON.** Improved Electrostatic Pinning Using a Biased, Conductive Shield. *Journal of Electrostatics,* 1997, vol. 40,41, 735-740
- Encyclopedia of Polymer Science and Engineering. vol. 12, 195-210
- **DRUCKSCHRIFT.** Encyclopedia of Polymer Science and Engineering. vol. 12, 195-210
- Improved Electrostatic Pinning Using a Biased, Conductive Shield. *Journal of Electrostatics,* 1997, vol. 40,41, 735-740